# EUROPÄISCHE PATENTSCHRIFT

(11) **EP 0 781 356 B1**
(45) Veröffentlichungstag und Bekanntmachung des Hinweises auf die Patenterteilung: **01.07.1998**
(21) Anmeldenummer: 96932360.9
(22) Anmeldetag: 24.09.1996
(51) Int. Cl.: D01D 1/06, F04C 15/00, F16K 51/00, D01F 2/00, B29C 47/68

(54) **VERFAHREN ZUM TRANSPORTIEREN EINER LÖSUNG VON CELLULOSE IN EINEM WÄSSRIGEN TERTIÄREN AMINOXID**
PROCESS FOR TRANSPORTING A CELLULOSE SOLUTION IN AN AQUEOUS TERTIARY AMINE OXIDEE
PROCEDE D' ACHEMINEMENT D' UNE SOLUTION DE CELLULOSE DANS UN OXYDE D' AMINE TERTIAIRE AQUEUX

(30) Priorität: 26.09.1995 AT 1596/95
(43) Veröffentlichungstag der Anmeldung: 02.07.1997
(73) Patentinhaber: LENZING AKTIENGESELLSCHAFT, 4860 Lenzing (AT)
(72) Erfinder: KALT, Wolfram, 4860 Lenzing (AT); MÄNNER, Johann, 4852 Weyregg (AT); FIRGO, Heinrich, 4840 Vöcklabruck (AT); SCHWENNINGER, Franz, (AT)
(74) Vertreter: Schwarz, Albin, Dr. Kopecky & Schwarz Patentanwälte
(86) Internationale Anmeldenummer: AT9600171
(87) Internationale Veröffentlichungsnummer: WO9712083

(56) Entgegenhaltungen:
- EP-A- 0 189 670
- EP-A- 0 652 098
- WO-A-94/02408
- DE-A-19 524 340
- US-A- 1 785 386
- US-A- 2 943 946

## Beschreibung

Die Erfindung betrifft ein Verfahren zum Transportieren einer Lösung von Cellulose in einem wäßrigen tertiären Aminoxid. Die Erfindung betrifft ferner eine Anlage zur Durchführung des Verfahrens.

Für die zwecke der vorliegenden Beschreibung und der vorliegenden Patentansprüche wird die Bezeichnung viskose Masse oder Spinnmasse für eine Lösung verwendet, welche Cellulose und ein wässeriges tertiäres Aminoxid enthält, und welche zu cellulosischen Formkörpern jeglicher Art, insbesondere Fasern und Folien, verarbeitet werden kann. Die Herstellung der Spinnmasse und ihre Verarbeitung wird im folgenden der Einfachheit allgemein als Aminoxidverfahren bezeichnet.

Tertiäre Aminoxide sind als alternative Lösungsmittel für Cellulose bekannt. Aus der US-PS 2,179,181 ist beispielsweise bekannt, daß tertiäre Aminoxide Cellulose ohne Derivatisierung zu lösen vermögen und daß aus diesen Lösungen durch Fällung cellulosische Formkörper, wie Fasern, gewonnen werden können. Aus der EP-A - 0 553 070 der Anmelderin sind weitere tertiäre Aminoxide bekannt. Alle tertiären Aminoxide, die Cellulose zu lösen vermögen, sind gemeint, wenn nachfolgend der Einfachheit halber lediglich NMMO (= N-Methylmorpholin-N-oxid) angesprochen wird.

Tertiäre Aminoxide bieten als alternative Lösungsmittel insofern einen Vorteil, als die Cellulose im Gegensatz zum Viskoseverfahren vom NMMO nicht-derivatisierend gelöst wird, wodurch die Cellulose nicht chemisch regeneriert werden muß, das NMMO chemisch unverändert bleibt und beim Fällen in das Fällbad übergeht, aus diesem rückgewonnen und für eine erneute Lösungsbereitung wiederverwendet werden kann. Das NMMO-Verfahren eröffnet somit die Möglichkeit eines geschlossenen Lösungsmittelkreislaufes. Dazu kommt noch, daß NMMO eine äußerst geringe Toxizität aufweist.

Beim Auflösen von Cellulose in NMMO nimmt jedoch der Polymersationsgrad der Cellulose ab. Zusätzlich führt insbesondere die Anwesenheit von Metallionen (z.B. Fe³⁺) zu radikalisch initiierten Kettenspaltungen und damit zu einem deutlichen Abbau der Cellulose und des Lösungsmittels (Buijtenhuijs et al.: The Degradation and Stabilization of Cellulose Dissolved in N-Methylmorpholin-N-Oxide (NMMO), in "Das Papier", 40. Jahrgang, Heft 12, Seiten 615-619, 1986).

Auch Aminoxide weisen allgemein nur eine begrenzte Thermostabilität auf, die in Abhängigkeit von der Struktur variiert. Das Monohydrat von NMMO liegt unter Normalbedingungen als weißer kristalliner Feststoff vor, der bei 72°C schmilzt. Die Anhydroverbindung schmilzt hingegen erst bei 172°C. Beim Erhitzen des Monohydrates tritt ab 120/130°C eine starke Verfärbung auf. Ab 175°C wird eine exotherme Reaktion unter vollständiger Entwässerung der Schmelze und heftiger Gasentwicklung mit explosionshaftem Verlauf ausgelöst, wobei Temperaturen über 250°C erreicht werden.

Es ist bekannt, daß metallisches Eisen und Kupfer, sowie insbesondere deren Salze, die Zersetzungstemperaturen von NMMO beträchtlich herabsetzen, wobei gleichzeitig die jeweilige Zersetzungsgeschwindigkeit erhöht wird.

Im übrigen tritt zu den oben genannten Problemen noch ein weiteres: die thermische Instabilität der NMMO-Cellulose-Lösungen selbst. Darunter ist zu verstehen, daß in den Lösungen bei den erhöhten Temperaturen der Verarbeitung (etwa 110-120°C) unkontrollierbare Zersetzungsprozesse ausgelöst werden können, die unter Entwicklung von Gasen zu heftigen Verpuffungen, Bränden und sogar zu Explosionen führen können.

Die großtechnische Herstellung und Verarbeitung von Lösungen von Cellulose in einem wäßrigen Aminoxid erfolgt in einer industriellen Anlage, deren Elemente insbesondere aus Eisen und Stahl bestehen, und in der verschiedene apparative Bauteile, wie zum Beispiel Rohrleitungen, Filter, Pumpen, Kugelhähne oder Puffertanks aus Eisen oder Stahl zum Einsatz kommen. Praktisch alle eingesetzen Bauteile sind dadurch zu charakterisieren, daß in ihnen eine Strömungsbeeinflussung der Celluloselösung auftritt, die im Regelfall bei hochviskosen Lösungen zu unterschiedlichen Strömungsgeschwindigkeiten der Lösung im jeweiligen Bauteil führt.

Bestimmte, in einer Anlage zur Herstellung von Celluloseformkörpern nach dem Aminoxidverfahren eingesetzten Bauteile zeichnen sich dadurch aus, daß sie Stellen aufweisen, an denen die Strömungsgeschwindigkeit der Celluloselösung sogar völlig zum Erliegen kommt. Bereiche mit solchen statischen Strömungsbedingungen werden Totzonen genannt.

Die Umgehung und Vermeidung von Totzonen, in denen das Medium über lange Zeiten einer Temperaturbelastung ausgesetzt ist und im oben angeführten Sinn degeneriert und unter Ausbildung korrosiver Abbauprodukte vermehrt Metalle aus Apparatebauteilen herauslösen kann, ist ein zentrales Anliegen einer sicherheitstechnisch ausgereiften Prozeßgestaltung für das Aminoxidverfahren.

Besonders gefährliche Totzonen sind gerade jene, die es zulassen, daß abgebaute, eventuell bereits durch Korrosionsprozesse an Bauteilmaterialien metallisch angereicherte Lösungen bei mechanischer Bewegung dieses Bauteils in den Hauptstrom der viskosen, thermisch instabilen Celluloselösung rückgeführt werden. So wurde z.B. herausgefunden, daß in einem sehr kleinen Spalt zwischen Kolben und Gehäuse eines rückspülbaren Filteraggreates (Figur 4a) Celluloselösung geringfügig eindringen und vollständig degenerieren kann.

Aufgrund der bei kommerziell erhältlichen Geräten bewußt angelegten engen Passung zwischen bewegten Bauteilen ("metallische Dichtung"), sowie der hohen Viskosität der Lösung resultiert eine nach örtlicher Paßgenauigkeit variierende, in Summe jedoch sehr geringe Strömungsgeschwindigkeit der eindringenden Lösung. Diese erleidet über Tage und Wochen bei den im Bauteil herrschenden Temperaturen das oben beschriebene Abbauverhalten, wobei jedoch die bei den exothermen Prozessen gebildete Reaktionswärme aufgrund der geringen Masse der eingedrungenen Lösung völlig abgeführt wird. Die Degenerierung der Lösung geht dabei soweit, daß mit der Zeit metallhältige Beläge entstehen, die kein Fließverhalten mehr zeigen und auch bei der Verwendung von Bauteilen aus Edelstahl hohe Anteile an Eisen, die in der Größenordnung einiger Masse% sein können, enthalten können.

Die bei Rückspülung des Filters bzw. bei Siebwechsel notwendige Kolbenverschiebung bewirkt dann bei Vorhandensein solcher Abbaureste und Beläge einen Eintrag dieser gefährlichen Rückstände ins System, was z.B. exotherme Reaktionsverläufe im Produktstrom auslösen kann.

Aus der EP-A - 0 652 098 ist ein Verfahren zur Filtration einer thermisch instabilen Polymerschmelze bekannt, wobei tote Zonen vermieden werden sollen. Dies wird bei einem Verfahren erreicht, bei dem die Polymerschmelze von unten in die von Wärmeträgerflüssigkeit umspülten Rohre eines Rohrbündelwärmetauschers gepumpt wird, wobei in jedes Wärmetauscherrohr eine Filterkerze unter Ausbildung eines äußeren Ringspaltes derart eingesetzt ist, daß der Hauptstrom der Polymerschmelze nach Durchtritt durch die Filterkerzen und ein Nebenstrom ohne Durchtritt durch die Filterkerzen oben aus den Wärmetauscherrohren austreten und anschließend vereinigt werden.

Technische Maßnahmen zur Vermeidung von Totzonen wurden z.B. in der WO 94/02408 beschrieben, wobei ein Abdichtungsprinzip zur Anwendung kommt, um das Eindringen von Spinnmasse zwischen bewegte Behälterteile zu verhindern.

Da bei vielen bewegten Bauteilen die beschriebene Vorgangsweise der Abdichtung von Toträumen nicht durchführbar oder auch auf Dauer nicht zweckmäßig ist, stellt sich die vorliegende Erfindung zur Aufgabe, ein Verfahren zum Transportieren einer Lösung von Cellulose in einem wäßrigen tertiären Aminoxid durch ein Bauteil, in welchem die Strömungsgeschwindigkeit der Celluloselösung im Bauteil unterschiedlich groß ist, zu schaffen, das die oben genannten Probleme nicht aufweist und somit ein sicheres Transportieren der Celluloselösung gestattet.

Das erfindungsgemäße Verfahren zum Transportieren und zur Verarbeitung einer Lösung von Cellulose in einem wäßrigen tertiären Aminoxid durch ein bzw. in einem Bauteil, wobei die Strömungsgeschwindigkeit der Celluloselösung im Bauteil unterschiedlich groß ist, ist dadurch gekennzeichnet, daß im Bauteil an einer Stelle, an der die Strömungsgeschwindigkeit vergleichweise klein ist, eine öffnung vorgesehen ist, durch welche ein Teil der Celluloselösung aus dem Bauteil austritt.

Mit dem Ausdruck "aus dem Bauteil austritt" ist gemeint, daß sich dieser Teil der Celluloselösung vom Hauptstrom abzweigt und nicht wieder mit diesem vereinigt.

Mit dem Ausdruck "vergleichsweise klein" ist der Vergleich mit der Strömungsgeschwindigkeit der Celluloselösung zum Hauptstrom, der durch den Bauteil transportiert wird, gemeint. Die Erfindung beruht auf der Erkenntnis, daß die Probleme, welche eine degenerierte Celluloselösung, die in Toträumen an Metalloberflächen haftet, hervorruft, nicht auf wirkungsvolle Weise dadurch gelöst werden können, daß die verwendeten Bauteile unter Vermeidung von Toträumen möglichst vollständig abgedichtet werden, wie dies im Stand der Technik versucht wird, sondern daß geradezu im Gegenteil an einem Totraum eine öffnung vorgesehen werden soll, aus der Celluloselösung austreten und sich nicht ansammeln und zersetzen kann.

Die Öffnung, aus der die Celluloselösung austreten kann, ist beispielsweise ein Loch, ein Spalt oder ähnliches, das dazu geeignet ist, daß Celluloselösung unter den gewählten Betriebsbedingungen austreten kann.

Durch die erfindungsgemäße Schaffung einer derartigen öffnung wird somit verhindert, daß sich in Toträumen Spinnmasse ansammeln und zersetzen kann.

Die US-A-2 943 946 betrifft ein Verfahren zum Transportieren einer Celluloseacetatlösung, welche Gelpartikel enthält, die aus dem Hauptstrom der Celluloseacetatlösung entfernt werden, indem die Lösung in einem erweiterten Rohrteil in einen Haupt- und Nebenstrom aufgeteilt werden, wobei der Nebenstrom die Gelpartikel enthält und aus der ringförmigen Erweiterung des erweiterten Rohrteiles austreten gelassen wird. Die Vermeidung von Totzonen in der Strömung, um nötigenfalls die Gefahr eines thermischen Zersetzens zu vermindern, ist in der US-A-2 943 946 nicht beschrieben.

Eine bevorzugte Ausgestaltung des erfindungsgemäßen Verfahrens ist dadurch gekennzeichnet, daß die Öffnung, die im Bauteil vorgesehen ist, so gestaltet ist, daß Celluloselösung austreten kann, welche gemäß dem unten beschriebenen Thermostabilitätstest in Mischung mit transportierter Celluloselösung eine Anstiegstemperatur aufweist, die um maximal 10°C, insbesondere maximal 5°C, unter der Anstiegstemperatur der transportierten Celluloselösung liegt.

Es hat sich gezeigt, daß die Thermostabilität der Celluloselösung umso mehr abnimmt, je länger sie braucht, durch die Öffnung austreten zu können. Die oben erwähnte bevorzugte Ausgestaltung des erfindungsgemäßen Verfahrens ist somit eine Lehre für den Fachmann, die öffnung für die Celluloselösung geeignet zu gestalten. Eine Methode zur Prüfung der Thermostabilität ist unten angegeben.

Als Bauteil kann im erfindungsgemäßen Verfahren beispielsweise ein Filter, ein Flansch, eine Pumpe, ein Ventil oder ein Rückspülinjektor vorgesehen sein.

Die Erfindung betrifft ferner eine industrielle Anlage zur Herstellung eines Celluloseformkörpers nach dem Aminoxidverfahren, welche Anlage mindestens einen Bauteil aufweist, durch welchen Celluloselösung transportiert wird, wobei die Strömungsgeschwindigkeit der Celluloselösung im Bauteil unterschiedlich groß ist, welche Anlage dadurch gekennzeichnet ist, daß im Bauteil an einer stelle, an der die Strömungsgeschwindigkeit vergleichsweise klein ist, eine Öffnung vorgesehen ist, durch welche ein Teil der Celluloselösung aus dem Bauteil austritt.

Eine bevorzugte Ausführungsform der erfindungsgemäßen Anlage ist dadurch gekennzeichnet, daß die öffnung, die im Bauteil vorgesehen ist, so gestaltet ist, daß Celluloselösung austreten kann, welche gemäß dem oben beschriebenen Thermostabilitätstest in Mischung mit transportierter Celluloselösung eine Anstiegstemperatur aufweist, die um maximal 10°C, inbesondere um maximal 5°, unter der Anstiegstemperatur der transportierten Celluloselösung liegt.

Es wurde somit gefunden, daß eine für das Aminoxidverfahren völlig neue Vorgangsweise darin besteht, in verschiedensten Bauteilen auftretende Toträume durch die Anbringung geeigneter öffnungen, durch welche die sich ansammelnde viskose Celluloselösung aus dem jeweiligen Bauteil austreten kann, zu vemeiden. Die Öffnung sollte so gestaltet sein, daß die Geschwindigkeit der Produktabführung zweckmäßigerweise so groß ist, daß der in Abhängigkeit von Temperatur und Verweilzeit im Bauteil erlittene Abbau der Spinnmasse nicht dazu ausreicht, daß bei Vermengung einer definierten Menge der aus dem Bauteil austretenden Masse mit einer definierten Menge an intakter Spinnmasse deren Thermostabilität maßgäblich nach unten beeinflußt wird.

Es hat sich gezeigt, daß eine aus Sicht der Prozeßsicherheit akzeptable und wirtschaftliche Situation dann gegeben ist, wenn in einem unten beschriebenen Versuch gezeigt werden kann, daß durch einen Zusatz von 1% (bezogen auf intakte spinnmasse) einer austretenden Masse die Thermostabilität zu einer intakten Spinnmasse weniger als 10°C, bezogen auf den Wert der gleichen intakten Spinnmasse ohne Zusatz, herabgesetzt wird.

Unter dem Ausdruck "intakte Spinnmasse" wird jene spinnmasse verstanden, die im Hauptstrom durch den Bauteil transportiert wird.

Mit den nachfolgenden Beispielen wird die Erfindung noch näher beschrieben.

### Thermostabilitätstest

### 1. Intakte spinnmasse (Kontrolle)

Zunächst wurde intakte spinnmasse (Zusammensetzung: 15% Cellulose, 75% NMMO, 10% H₂O) im festen, auskristallisierten Zustand in einer Labormühle fein gemahlen.

Der Test wurde in einem Sikarex Ofen (Type: TSC 512, Hersteller: Systag) ausgeführt, wobei 11,5 g der oben bereiteten Probe in einem verschlossenen Druckgefäß mit Glaseinsatz erwärmt wurden. Als Temperaturprogramm wurde ein step-Experiment der Standard Software gefahren, bei dem zwischen zwei isothermen Stufen (1. Stufe 90°C, 2. Stufe 180°C) sehr langsam aufgewärmt wurde (Heizrate von 6°C/h). Dies ergab im interessierenden Bereich eine dynamische Fahrweise, die hervorragende Reproduzierbarkeit hinsichtlich der Exothermieereignisse lieferte. Während dieser Erwärmung wurde laufend die Temperaturdifferenz zwischen der Temperatur des Heizmantels (TM) und der Temperatur der Probe (TR) gemessen. Die erfaßten Daten wurden auf einem Computer verarbeitet.

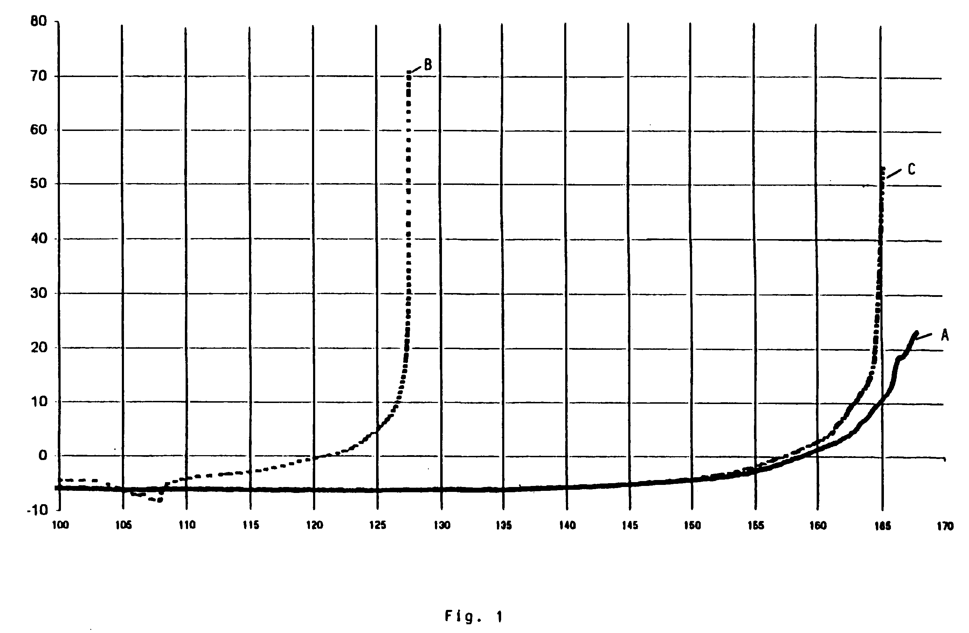

Ein repräsentatives Ergebnis ist in der Figur 1 als Kurve "A" (Kontrolle) dargestellt, wobei als Abszisse die Manteltemperatur (ab 100°C) und als Ordinate die Temperaturdifferenz (°C) zwischen der Probe und dem Mantel (TR-TM) aufgetragen ist. Der Kurve A ist zu entnehmen, daß bis zu einer Manteltemperatur von 150°C in der Probe offenbar praktisch keine exothermen Reaktionen ablaufen, da die Probentemperatur während des Aufheizens konstant um etwa 5° niedriger als die Manteltemperatur ist. Dies enspricht einem normalen Aufheizvorgang mit der oben angegebenen Geschwindigkeit.

Ab einer Manteltemperatur von etwa 150°C steigt die Kurve A immer steiler an, was bedeutet, daß die Temperatur der Probe schneller steigt als die Temperatur des Mantels. Dies ist auf exotherme Reaktionen in der Probe zurückzuführen. Bei einer Manteltemperatur von 165°C beträgt die Temperaturdifferenz bereits 10°C, was eine Probentemperatur von 175°C bedeutet.

### 2. Rückstand aus Filterkolben

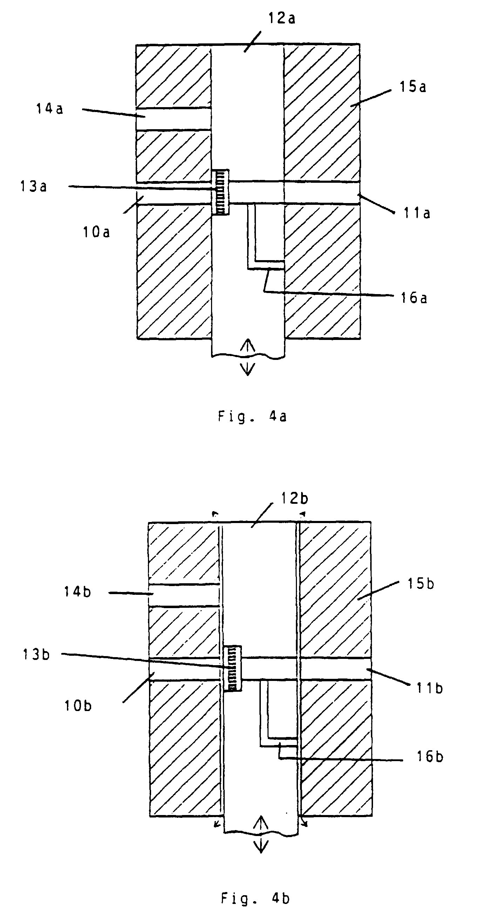

Als nächstes wurde der obige Test mit einer innigen Mischung aus 11,5 g der oben genannten, fein gemahlenen Spinnmasse mit 0,115 g (= 1%) einer zu prüfenden Masse, die sich als Belag auf einem Kolben eines Rückspülfilters des Standes der Technik gemäß Figur 4b befand, wiederholt. Das Ergebnis ist in der Figur 1 als Kurve "B" eingetragen.

Dieser Kurve ist zu entnehmen, daß exotherme Reaktionen in der untersuchten Masse bereits ab einer Temperatur von etwa 120°C auftreten, was anzeigt, daß die getestete Mischung thermisch viel weniger stabil ist, als die intakte Spinnmasse (Kontrolle Kurve "A").

### 3. Leckagemasse gemäß der Erfindung

Schließlich wurde der unter Punkt 2 beschriebene Test mit Leckagemasse wiederholt, die aus einem Spalt eines Filter gemäß Figur 4b ausgetreten war, der zwischen Kolben und Kolbenwand vorgesehen war. Das Ergebnis ist in der Figur 1 als Kurve "C" eingetragen.

Dieser Kurve ist zu entnehmen, daß die untersuchte Masse in hohem Ausmaß thermisch stabiler ist als der Belag, der sich im Stand der Technik bildet. Die untersuchte Masse ist sogar nur unwesentlich weniger thermisch stabil als die intakte Spinnmasse (Kontrolle Kurve "A").

### 4. Prüfung der Tauglichkeit einer Leckageöffnung

Um eine öffnung, die in einem Bauteil erfindungsgemäß vorgesehen wird, darauf zu testen, ob sie im Sinne der Erfindung geeignet ist, Spinnmasse ausreichend schnell austreten zu lassen, wird zunächst die thermische Stabilität der intakten Spinnmasse (siehe oben Punkt 1) und dann die oben unter Punkt 3 beschriebene Mischung aus intakter Spinnmasse und 1 Massen% (bezogen auf die intakte Spinnmasse) Leckagemasse gemessen. Die öffnung gewährleistet dann im Sinne der vorliegenden Erfindung eine ausreichende Prozeßsicherheit, wenn sich die Thermostabilität der Mischung nur wenig von der Thermostabilität der intakten Spinnmasse unterscheidet. Als Maß dafür wird für die Zwecke der vorliegenden Beschreibung und Patentansprüche die sogenannte "Anstiegstemperatur" definiert. Unter "Anstiegstemperatur" wird jene Temperatur des Mantels (Programmtemperatur) verstanden, bei der die Temperatur der Meßprobe aufgrund exothermer Reaktionen um 10°C höher als die Temperatur des Heizmantels liegt.

Im Sinne der vorliegenden Beschreibung und Patentansprüche unterscheidet sich die Thermostabilität der Mischung dann nur wenig von der Thermostabilität der intakten Spinnmasse, wenn die Differenz der Anstiegstemperaturen von intakter Spinnmasse und Mischung maximal 10°C ist.

Zur Verdeutlichung wird dieses Meßprinzip an Hand der Figur 1 noch näher erläutert.

Zuerst wird mit intakter Spinnmasse gemäß obiger Methodik die Kurve A aufgenommen. Aus der Kurve A ist ersichtlich, daß die intakte Spinnmasse eine Anstiegstemperatur von etwa 165°C besitzt.

Dann wird die zu testende Mischung aus intakter Spinnmasse und Leckagemasse bereitet und diese getestet. Unter der Annahme, daß sich die Kurve C der Figur 1 ergibt, liegt die Anstiegstemperatur der homogenen Mischung bei etwa 163°C. Dies bedeutet, daß die Differenz der Anstiegstemperaturen 2°C (165-163) ist und daß die öffnung, aus der die Leckagemasse austrat, im Sinne der vorliegenden Erfindung geeignet gestaltet ist, da sich die Thermostabilität der Mischung von jener der intakten Spinnmasse nur wenig unterscheidet.

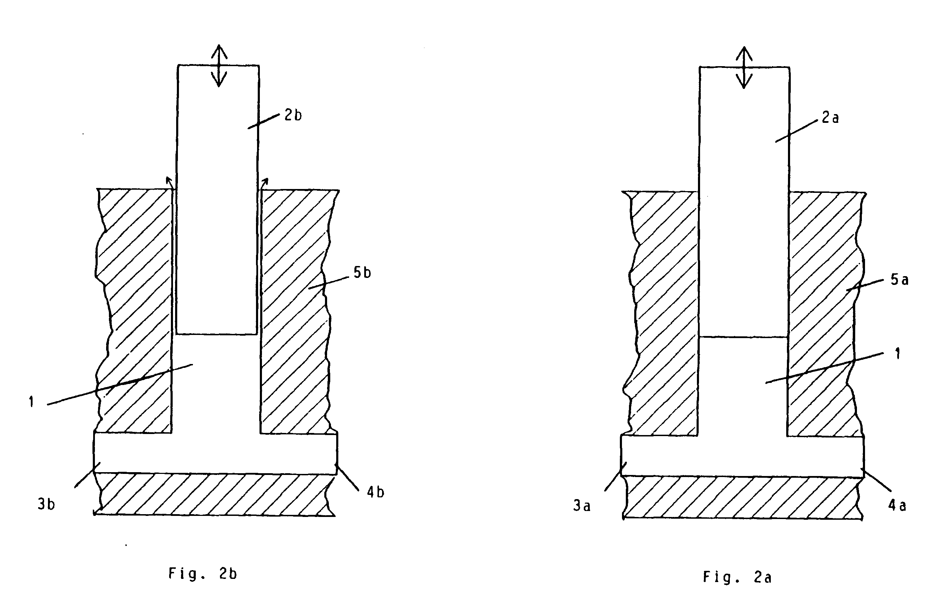

Im folgenden wird mit den Figuren 2 bis 4 schematisch gezeigt, wie an bekannten Bauteilen erfindungsgemäß öffnungen vorgesehen werden können, an denen Celluloselösung austreten kann.

Die Figuren 2a und 2b zeigen schematisch jeweils einen Schnitt durch einen Teil einer Puffervorrichtung mit einem Vorratsraum 1 zur Aufnahme von spinnmasse, wobei die Größe des Vorratsraumes 1 durch Bewegen des zylindrischen Kolbens 2a bzw. 2b eingestellt werden kann. Der Vorratsraum 1 wird über den Kanal 3a bzw. 3b mit Spinnmasse angeströmt. Die Bezugszeichen 4a bzw. 4b stehen für Abströmkanäle. Die Bezugszeichen 5a bzw. 5b stehen für das Puffergehäuse. Eine derartige Puffervorrichtung wird im Zusammenhang mit Rückspülfiltern auch als Rückspülinjektor bezeichnet.

Die Figur 2a stellt eine Puffervorrichtung des Standes der Technik dar, in der der Kolben 2a passgenau, d.h. praktisch ohne Leckagespalt, in den zylindrischen Vorratsraum 1 eingepaßt ist. Trotzdem ist erfahrungsgemäß ein Totraum zwischen der Kolbenoberfläche und der Wand des zylindrischen Vorratsraum vorhanden. Beim Bewegen des Kolbens 2a belegt sich seine Oberfläche mit Spinnmasse und zersetzt sich in Abhängigkeit von Temperatur und Verweilzeit, wobei Metallionen aus der Kolbenoberfläche herausgelöst werden können.

Dies wird erfindungsgemäß vermieden, indem ein Spalt zwischen dem Kolben 2b (Fig. 2b) und der zylindrischen Wand des Vorratsraumes 1 vorgesehen wird, der eine Größe aufweist, daß - bedingt durch den im Vorratsraum herrschenden Druck und der Viskosität der spinnmasse - bei allen Betriebsstellungen des Kolbens genügend viel Spinnmasse austreten kann, daß sich kein Totraum bilden kann und sich am Kolben keine Spinnmasse abgelagern kann, sodaß die oben beschriebene Forderung nach ausreichender thermischer Stabilität erfüllt ist. Die austretende Spinnmasse ist in der Figur 2b mit schräg nach oben gerichteten Pfeilen dargestellt.

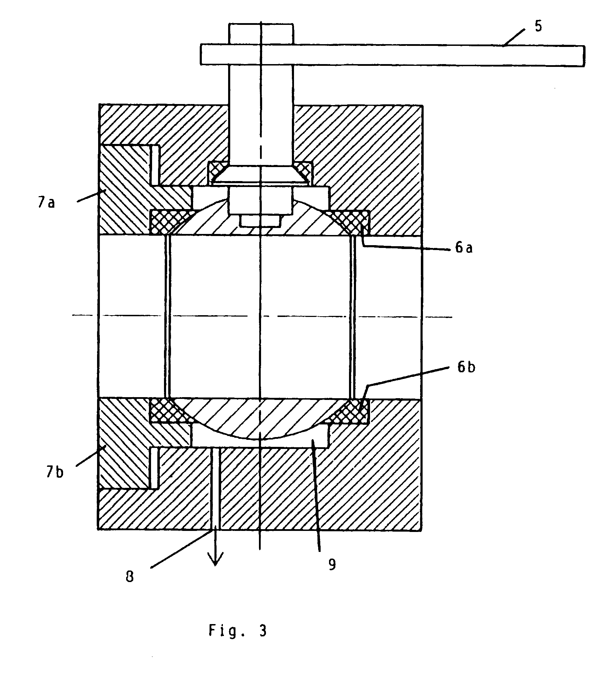

Mit der Figur 3 ist schematisch ein Schnitt durch einen Kugelhahn dargestellt. Die Bezugsziffer 5 steht für einen Hebel, mit welchem der Kugelhahn gesperrt oder geöffnet werden kann. Mit 6a und 6b sind Dichtringe bezeichnet, die mit Einschüben 7a bzw. 7b reguliert werden können. Die Bezugsziffer 8 steht für die erfindungsgemäß vorgesehene Leckageöffnung, durch welche Spinnmasse, die sich im Raum 9 des Kugelhahns befindet, austreten kann. Die aus dem Kugelhahn austretende Spinnmasse ist mit einem nach unten gerichteten Pfeil dargestellt. Auch hier gilt, daß die Abmessungen der Leckageöffnung dann richtig gewählt sind, wenn die austretende Spinnmasse das oben angegebene Kriterium hinsichtlich der Thermostabilität aufweist.

Die Figur 4 stellt schematisch Schnitte durch Rückspülfilter dar. Die Bezugsziffern 10a bzw. 10b bezeichnen Anströmkanäle für die zu filtrierende Spinnmasse, 11a bzw. 11b bezeichnen die Abströmkanäle, 12a bzw. 12b bezeichnen die Kolben mit den Filtern 13a bzw. 13b und 14a bzw. 14b bezeichnen die Rejectkanäle. 15a bzw. 15b stehen für die Gehäuse, und mit 16a bzw. 16b sind Rejectbohrungen angedeutet.

Für die Kolben 12a und 12b gelten prinzipiell jene Ausführungen, die bereits für die Kolben 2a und 2b der Figuren 2a bzw. 2b gemacht wurden: Erst die erfindungsgemäße Schaffung eines Spaltes zwischen der zylindrischen Wand des Kolbens 12b und der Innenwand des Gehäuses 15b ermöglicht ein Austreten von Spinnmasse und verhindert eine Belagsbildung an der Kolbenwand, wie sie bei einem Rückspülfilter gemäß Figur 4a auftritt.

Es ist dem Fachmann klar, daß sich die vorliegende Erfindung noch bei anderen Bauteilen, welche Toträume aufweisen, anwenden läßt.

## Patentansprüche

1. Verfahren zum Transportieren einer Lösung von Cellulose in einem wäßrigen tertiären Aminoxid durch ein Bauteil, wobei die Strömungsgeschwindigkeit der Celluloselösung im Bauteil unterschiedlich groß ist, dadurch gekennzeichnet, daß im Bauteil an einer Stelle, an der die Strömungsgeschwindigkeit vergleichweise klein ist, eine öffnung vorgesehen ist, durch welche ein Teil der Celluloselösung aus dem Bauteil austritt.

2. Verfahren nach Anspruch 1, dadurch gekennzeichnet, daß die öffnung, die im Bauteil vorgesehen ist, so gestaltet ist, daß Celluloselösung austreten kann, welche in Mischung mit 99% transportierter Celluloselösung eine Anstiegstemperatur aufweist, die um maximal 10°C unter der Anstiegstemperatur der transportierten Celluloselösung liegt.

3. Verfahren nach Anspruch 2, dadurch gekennzeichnet, daß die öffnung, die im Bauteil vorgesehen ist, so gestaltet ist, daß Celluloselösung austreten kann, welche in Mischung mit 99% transportierter Celluloselösung eine Anstiegstemperatur aufweist, die um maximal 5°C unter der Anstiegstemperatur der transportierten Celluloselösung liegt.

4. Verfahren nach einem der Ansprüche 1 bis 3, dadurch gekennzeichnet, daß als Bauteil ein Filter, eine Pumpe, ein Ventil, ein Flansch oder ein Rückspülinjektor vorgesehen ist.

5. Anlage zur Herstellung eines Celluloseformkörpers nach dem Aminoxidverfahren, welche Anlage einen Bauteil aufweist, durch welchen Celluloselösung transportiert wird, wobei die Strömungsgeschwindigkeit der Celluloselösung im Bauteil unterschiedlich groß ist, dadurch gekennzeichnet, daß im Bauteil an einer Stelle, an der die Strömungsgeschwindigkeit vergleichweise klein ist, eine öffnung vorgesehen ist, durch welche ein Teil der Celluloselösung aus dem Bauteil austritt.

6. Anlage nach Anspruch 5, dadurch gekennzeichnet, daß die öffnung, die im Bauteil vorgesehen ist, so gestaltet ist, daß Celluloselösung austreten kann, welche in Mischung mit 99% transportierter Celluloselösung eine Anstiegstemperatur aufweist, die um maximal 10°C unter der Anstiegstemperatur der transportierten Celluloselösung liegt.

7. Anlage nach Anspruch 6, dadurch gekennzeichnet, daß die öffnung, die im Bauteil vorgesehen ist, so gestaltet ist, daß Celluloselösung austreten kann, welche in Mischung mit 99% transportierter Celluloselösung eine Anstiegstemperatur aufweist, die um maximal 5°C unter der Anstiegstemperatur der transportierten Celluloselösung liegt.

## Claims

1. Method of transporting a solution of cellulose in an aqueous tertiary amine oxide through a component, wherein the flow velocity of the cellulose solution in the component varies, characterized in that there is provided in the component, at a point at which the flow velocity is comparatively low, an opening through which some of the cellulose solution escapes from the component.

2. Method according to Claim 1, characterized in that the opening provided in the component is so designed that cellulose solution can escape which, when mixed with 99% transported cellulose solution, has an incremental temperature which is not more than 10°C below the incremental temperature of the transported cellulose solution.

3. Method according to Claim 2, characterized in that the opening provided in the component is so designed that cellulose solution can escape which, when mixed with 99% transported cellulose solution, has an incremental temperature which is not more than 5°C below the incremental temperature of the transported cellulose solution.

4. Method according to one of Claims 1 to 3, characterized in that a filter, a pump, a valve, a flange or a return flow injector is provided as component.

5. Plant for producing a cellulose moulded body by the amine oxide method, which plant has a component through which cellulose solution is transported, wherein the flow velocity of the cellulose solution in the component varies, characterized in that there is provided in the component, at a point at which the flow velocity is comparatively low, an opening through which some of the cellulose solution can escape from the component.

6. Plant according to Claim 5, characterized in that the opening provided in the component is so designed that cellulose solution can escape which, when mixed with 99% transported cellulose solution, has an incremental temperature which is not more than 10°C below the incremental temperature of the transported cellulose solution.

7. Plant according to Claim 6, characterized in that the opening provided in the component is so designed so that cellulose solution can escape which, when mixed with 99% transported cellulose solution, has an incremental temperature which is not more than 5°C below the incremental temperature of the transported cellulose solution.

## Revendications

1. Procédé pour le transport d'une solution de cellulose dans un oxyde d'amine tertiaire en solution aqueuse à travers un composant dans lequel la vitesse d'écoulement de la solution de cellulose est variable, caractérisé en ce qu'une ouverture, par laquelle une partie de la solution de cellulose sort du composant, est prévue en un emplacement du composant auquel la vitesse d'écoulement est relativement petite.

2. Procédé selon la revendication 1, caractérisé en ce que l'ouverture qui est prévue dans le composant est configurée de manière à permettre la sortie de la solution de cellulose qui présente dans un mélange avec 99% de la solution de cellulose transportée une augmentation de température qui est inférieure d'au plus 10° C à l'augmentation de température de la solution de cellulose transportée.

3. Procédé selon la revendication 2, caractérisé en ce que l'ouverture qui est prévue dans le composant est configurée de manière à permettre la sortie de la solution de cellulose qui présente dans un mélange avec 99% de la solution de cellulose transportée une augmentation de température qui est inférieure d'au plus 5° C à l'augmentation de température de la solution de cellulose transportée.

4. Procédé selon l'une des revendications 1 à 3, caractérisé en ce que le composant prévu est un filtre, une pompe, un clapet, une bride ou un injecteur de recyclage.

5. Installation pour la fabrication d'un corps façonné en cellulose selon le procédé à l'oxyde d'amine, laquelle installation présente un composant à travers lequel la solution de cellulose est transportée, la vitesse d'écoulement de la solution de cellulose dans le composant étant variable, caractérisée en ce qu'une ouverture, par laquelle une partie de la solution de cellulose sort du composant, est prévue en un emplacement du composant auquel la vitesse d'écoulement et relativement petite.

6. Installation selon la revendication 5, caractérisée en ce que l'ouverture qui est prévue dans le composant est configurée de manière à permettre la sortie de la solution de cellulose qui présente dans un mélange avec 99% de la solution de cellulose transportée une augmentation de température qui est inférieure d'au plus 10° C à l'augmentation de température de la solution de cellulose transportée.

7. Installation selon la revendication 6, caractérisée en ce que l'ouverture qui est prévue dans le composant est configurée de manière à permettre la sortie de la solution de cellulose qui présente dans un mélange avec 99% de la solution de cellulose transportée une augmentation de température qui est inférieure d'au plus 5° C à l'augmentation de température de la solution de cellulose transportée.
